# EUROPÄISCHE PATENTSCHRIFT

(11) **EP 1 042 399 B1**
(45) Veröffentlichungstag und Bekanntmachung des Hinweises auf die Patenterteilung: **17.07.2002**
(21) Anmeldenummer: 98966271.3
(22) Anmeldetag: 09.12.1998
(51) Int. Cl.: C08K 5/3435, B65D 1/02

(54) **VERWENDUNG VON DURCH STERISCH GEHINDERTE AMINE STABILISIERTEN ETHYLENPOLYMEREN ZUR HERSTELLUNG VON KUNSTSTOFFKÖRPERN FÜR LAGERUNG/TRANSPORT VON PFLANZENÖLESTERN**
USE OF STERICALLY HINDERED AMINES OR STABILISED ETHYLENE POLYMERS IN THE PRODUCTION OF PLASTIC BODIES FOR STORAGE AND TRANSPORT OF VEGETABLE OIL ESTERS
UTILISATION DE POLYMERES D'ETHYLENE STABILISES PAR DES AMINES A EMPECHEMENT STERIQUE OU POUR PRODUIRE DES CORPS MOULES EN MATIERES PLASTIQUES POUR LE STOCKAGE/TRANSPORT D'ESTERS D'HUILE VEGETALE

(30) Priorität: 18.12.1997 DE 19756276
(43) Veröffentlichungstag der Anmeldung: 11.10.2000
(73) Patentinhaber: Basell Polyolefine GmbH, 77694 Kehl (DE)
(72) Erfinder: ROHDE, Wolfgang, D-67346 Speyer (DE); DELOUX, Laurent, D-69115 Heidelberg (DE)
(86) Internationale Anmeldenummer: EP9808011
(87) Internationale Veröffentlichungsnummer: WO9932549

(56) Entgegenhaltungen:
- EP-A- 0 290 388
- EP-A- 0 309 283
- WO-A-96/08532
- WO-A-98/20065
- WO-A-98/27149
- DE-A- 19 637 181
- PATENT ABSTRACTS OF JAPAN vol. 018, no. 591 (C-1272), 11. November 1994 & JP 06 220263 A (TONEN CHEM CORP), 9. August 1994 -& DATABASE WPI Week 9436 Derwent Publications Ltd., London, GB; AN 94-291024 XP002102598
- PATENT ABSTRACTS OF JAPAN vol. 015, no. 425 (C-0879), 29. Oktober 1991 & JP 03 174459 A (TONEN CHEM CORP), 29. Juli 1991

## Beschreibung

Gegenstand der vorliegenden Erfindung ist die Verwendung von durch sterisch gehinderte Amine oder deren N-Hydroxy- oder N-Oxylderivate stabilisierten Ethylenhomo- und -copolymeren zur Herstellung von Kunststoffkörpern und Bauteilen für die Lagerung und den Transport von Pflanzenölestern.

Weiterhin betrifft die Erfindung Kunststoffkörper und Bauteile für den Transport und die Lagerung von Pflanzenölestern, die unter Verwendung solcher stabilisierter Polymerer hergestellt werden, sowie Ethylenhomo- und Copolymere, die durch Zusatz von Derivaten des Chinolins oder Diphenylamins stabilisiert sind.

Im Bereich der Kraftstoffanlage von Automobilen finden Kunststoffkraftstoffbehälter (KKB) aus Polyethylen breite Verwendung für Otto- und Dieselkraftfahrzeuge. Insbesondere für die mit Dieselkraftstoff betriebenen Fahrzeuge gewinnen sog. "Biodiesel"-Kraftstoffe auf der Basis nachwachsender Rohrstoffe zunehmende Bedeutung. Die wichtigsten Biodiesel-Kraftstoffe basieren auf sog. Pflanzenölmethylestern (PME), von denen der Rapsölmethylester (RME) der wichtigste Vertreter ist. Mit zunehmender Bedeutung der Biodiesel-Kraftstoffe wird auch deren Lagerung und Transport in Gebinden oder Rohren aus Polyethylen immer wichtiger.

Gegenüber zahlreichen im Kraftstoffsystem eines Kraftfahrzeuges eingesetzten Kunststoffen erweist sich RME als aggressiv. Auch hochmolekulares Polyethylen, wie es zur Herstellung von KKB und anderer Hohlkörper eingesetzt wird, kann von RME, insbesondere bei erhöhter Temperatur, angegriffen werden. Dabei tritt eine beschleunigte Versprödung des Materials ein, worunter die Dauergebrauchseigenschaften des Werkstoffs leiden.

Zur Behebung dieses Problems wurden Innenbeschichtungen der Hohlkörper vorgeschlagen. Ein Nachteil einer Innenbeschichtung ist jedoch, daß sie technisch recht aufwendig zu realisieren ist und damit stets beträchtliche zusätzliche Herstellkosten verursacht. Überdies werden im Bereich der KKB vermehrt coextrudierte 6-Schicht-Tanks mit einer mittig angeordneten Barriereschicht eingesetzt, deren zusätzliche Innenfluorierung die Herstellkosten solcher KKB stark belasten würde.

Der vorliegenden Erfindung lag daher die Aufgabe zugrunde, Ethylenhomo- und -copolymere zur Herstellung von Kunststoffkörpern und Bauteilen für die Lagerung und den Transport von Pflanzenölestern bereitzustellen, die gegen die Einwirkung von Pflanzenölestern stabilisiert sind.

Demgemäß wurde die Verwendung von durch sterisch gehinderte Amine oder durch N-Hydroxy- oder N-Oxylderivate stabilisierten Ethylenhomo- und -copolymeren zur Herstellung von Kunststoffkörpern und Bauteilen für die Lagerung und den Transport von Pflanzenölestern gefunden.

Weiterhin wurden Kunststoffkörper und Bauteile für den Transport und die Lagerung von Pflanzenölestern, die unter Verwendung solcher stabilisierter Polymerer hergestellt werden, sowie Ethylenhomo- und Copolymere, die durch Zusatz von Derivaten des Chinolins oder Diphenylamins stabilisiert sind, gefunden.

Zur Stabilisierung der Ethylenhomo- und -copolymere kommen N-Hydroxy- und N-Oxylderivate sterisch gehinderter. Amine, vorzugsweise aber die sterisch gehinderten Amine selbst in Betracht.

Unter sterisch gehinderten Aminen sollen dabei alle sekundären Amine verstanden werden, die an den zum Aminstickstoff benachbarten C-Atomen so substituiert sind, daß sie dort kein Wasserstoffatom tragen. Bevorzugt sind Derivate des 2,2,6,6-Tetramethylpiperidins, die entweder an der 4-Position oder am Aminstickstoff substituiert sind sowie Derivate des Chinolins und Diphenylamins.

### Geeignete Amine sind z.B. die folgenden Strukturen

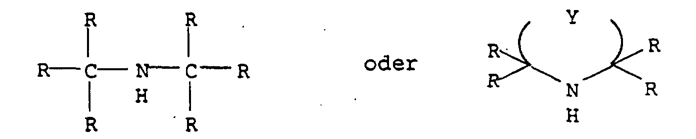

wobei R gleiche oder verschiedene Alkyl-, Cycloalkyl-, Aralkyloder Arylreste, die auch paarweise zu einem Ringsystem verbunden sein können, und Y eine Gruppe, die erforderlich ist, um einen 5-oder 6-gliedrigen Ring zu vervollständigen, bedeuten. Beispielsweise steht R für einen C₁-C₂₀-, insbesondere C₁-C₈-Alkylrest, einen C₅- oder C₆-Cycloalkylrest, einen Benzylrest oder einen Phenylrest. Y ist beispielsweise eine Alkylengruppe -(CH₂)₂- oder -(CH₂)₃-.

Weiterhin kommen auch die folgenden Strukturen in Betracht 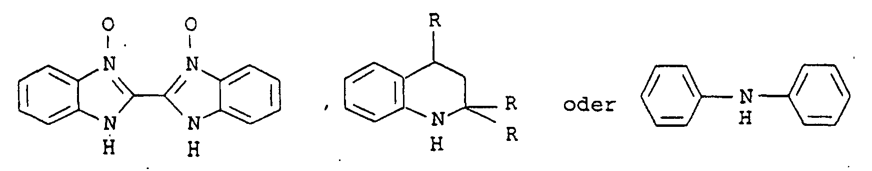 wobei die aromatischen Ringe jeweils noch 1 bis 3 inerte Substituenten tragen können, wie z.B. C₁-C₄-Alkyl, C₁-C₄-Alkoxy oder Cyano.

Vorzugsweise werden sterisch gerinderte Aminderivate von cyclischen Aminen eingesetzt, z.B. von Piperidin- oder Pyrrolidinverbindungen, die im Ring ein weiteres Heteroatom wie Stickstoff, Sauerstoff oder Schwefel enthalten können, wobei dieses Heteroatom nicht in Nachbarstellung zum gehinderten Aminstickstoff steht. Die sterische Hinderung ist durch Substituenten in beiden Nachbarstellungen zum Aminstickstoff gegeben, wobei als Substituenten Kohlenwasserstoffreste in Betracht kommen, die alle 4 Wasserstoffatome der α-CH₂-Gruppen ersetzen. Beispielsweise seien als Substituenten Phenyl, C₃-C₆-Cycloalkyl, Benzyl und insbesondere C₁-C₆-Alkylreste genannt, wobei die an dem selben α-C-Atom gebundenen Alkylreste auch untereinander zu einem 5-oder 6-Ring verbunden sein können. Besonders bevorzugt sind die unter R¹ und R² im einzelnen aufgeführten Reste. Vorzugsweise werden Derivate des 2,2,6,6-Tetraalkylpiperidins eingesetzt.

Bevorzugte sterisch gehinderte Amine oder deren N-Hydroxy- oder N-Oxylderivate zur erfindungsgemäßen Verwendung sind solche der allgemeinen Formel I 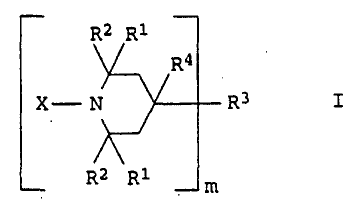 wobei
- R¹, R²: C₁-C₄-Alkyl, Phenyl oder gemeinsam mit dem C-Atom, an das sie gebunden sind, einen 5- oder 6-gliedrigen gesättigten Kohlenwasserstoffring,
- R³: Wasserstoff, Hydroxyl, Amino oder einen m-wertigen über Sauerstoff oder Stickstoff gebundenen organischen Rest oder zusammen mit R⁴ Sauerstoff oder eine unter R⁴ definierte Ringstruktur,
- R⁴: Wasserstoff, C₁-C₁₂-Alkyl oder zusammen mit R³ Sauerstoff oder zusammen mit R³ und dem C-Atom, an das sie gebunden sind, folgende Ringstrukturen 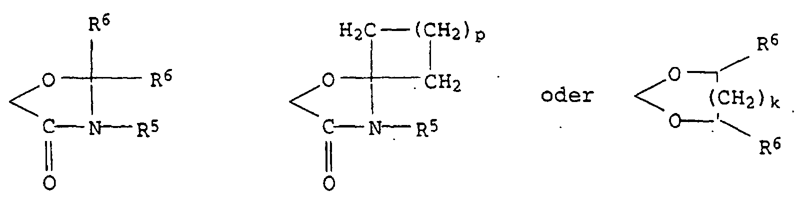 wobei für die Fälle, in denen R³ mit R⁴ einen gemeinsamen Rest bildet, m = 1 ist,
- R⁵: Wasserstoff, C₁-C₁₂-Alkyl oder - (CH₂)_{z}-COOR⁶,
- R⁶: gleiches oder verschiedenes C₁-C₁₈-Alkyl,
- X: Wasserstoff, Hydroxy oder Sauerstoff,
- k: 0 oder 1
- z, p: 1 bis 12 und
- m: 1 bis 100
bedeuten.

R¹ und R² können z.B. die C₁-C₄-Alkylgruppen Methyl, Ethyl, n-Propyl, Isopropyl, n-Butyl, Isobutyl, sec-Butyl oder tert-Butyl sein oder sie können zusammen eine Tetra- oder Pentamethylengruppe bilden. Bevorzugt sind R¹ und R² Methylgruppen.

Als R⁴ kommen beispielsweise Wasserstoff, die oben genannten C₁-C₄-Alkylgruppen sowie Pentyl, sec-Pentyl, tert-Pentyl, Neopentyl, Hexyl, 2-Methylpentyl, Heptyl, 2-Methylhexyl, Octyl, Isooctyl, 2-Ethylhexyl, Nonyl, 2-Methylnonyl, Isononyl, 2-Methyloctyl, Decyl, Isodecyl, 2-Methylnonyl, Undecyl, Isoundecyl, Dodecyl und Isododecyl, (die Bezeichnungen Isooctyl, Isononyl und Isodecyl sind Trivialbezeichnungen und stammen von den nach der Oxosynthese erhaltenen Carbonylverbindungen ab; vgl. dazu Ullmann's Encyklopedia of Industrial Chemistry, 5th Edition, Vol. A1. Seiten 290-293, sowie Vol. A10, Seiten 284 und 285) in Betracht.

p ist bevorzugt 6-12, besonders bevorzugt 9.

z ist bevorzugt 1-4, besonders bevorzugt 2.

Als R⁵ kommen neben Wasserstoff beispielsweise die oben angegebenen C₁-C₁₂-Alkylgruppen in Betracht. Bevorzugt steht R⁵ für Wasserstoff, C₁-C₄-Alkyl oder (CH₂)_{z}-COO(C₁-C₆-Alkyl), besonders bevorzugt für die Reste -CH₂-CH₂-COO(CH₂)₁₁-CH₃ und -CH₂-CH₂-COO(CH₂)₁₃-CH₃.

R⁶ kann beispielsweise eine der oben genannten C₁-C₁₂-Alkylgruppen oder Tridecyl, Isotridecyl, Tetradecyl, Pentadecyl, Hexadecyl, Heptadecyl oder Octadecyl sein. Bevorzugt sind Dodecyl und Hexadecyl.

Bevorzugte Reste R³ sind beispielsweise die folgenden m-wertigen Reste 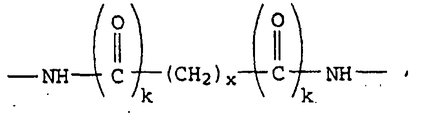 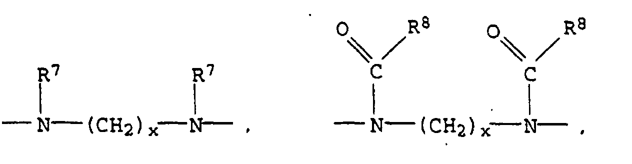 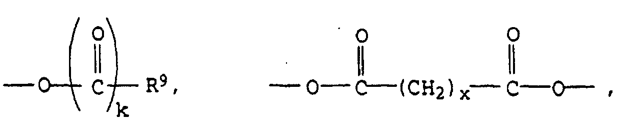 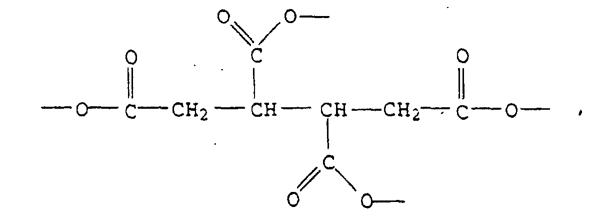 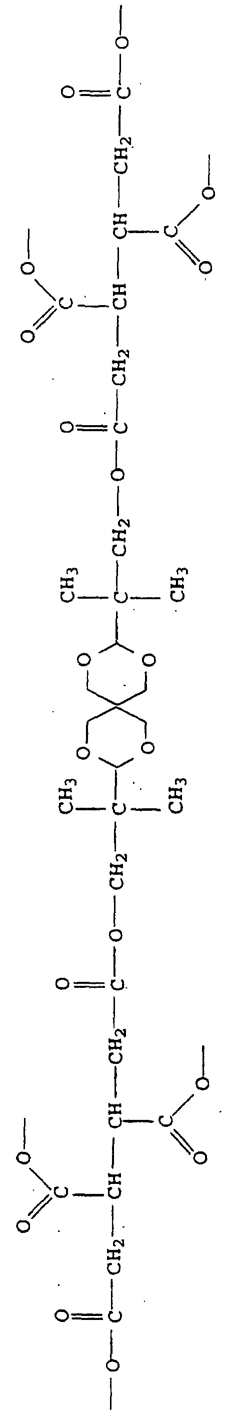 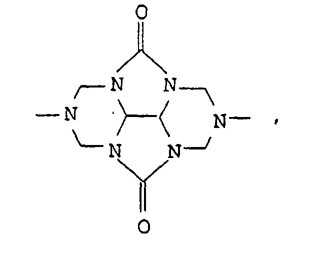 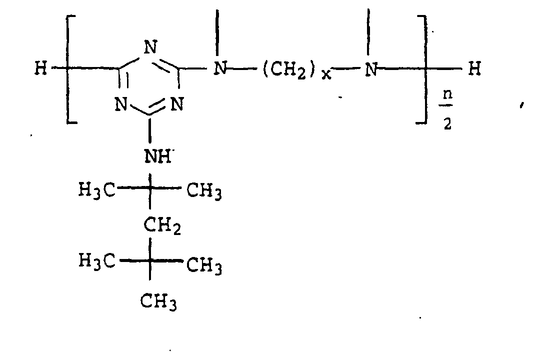 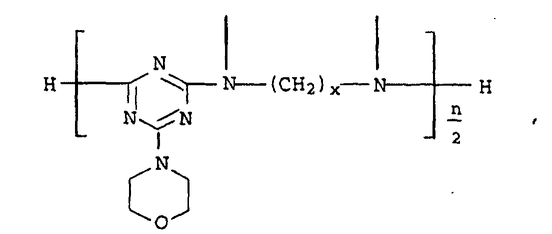 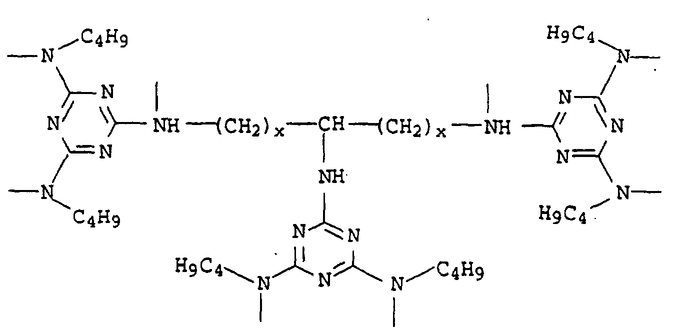 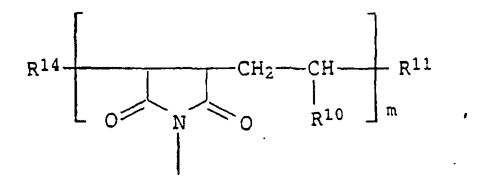 wobei
- R⁷: C₁-C₁₂-Alkyl oder - (CH₂)_{z}-COOR⁶
- R⁸: Wasserstoff oder C₁-C₁₈-Alkyl,
- R⁹: C₁-C₁₈-Alkyl, Vinyl oder Isopropenyl,
- R¹⁰: C₈-C₂₂-Alkyl,
- R¹¹: Wasserstoff oder einen organischen Rest, wie er bei der radikalischen Polymerisation der Ausgangsmonomeren üblicherweise entsteht,
- k: 0 oder 1,
- x: 1 bis 12 und
- n: eine gerade Zahl m
bedeuten.

Ist R³ einer dieser Reste, so ist R⁴ bevorzugt Wasserstoff. Die Variable m kann dabei 1 bis 100 bedeuten. Bevorzugt ist m 1,2,3,4 oder eine Zahl von 10 bis 50, wobei besonders bei den oligomeren oder polymeren Resten R³ in der Regel Gemische eingesetzt werden.

Es hat sich gezeigt, daß oliogomere und polymere Aminderivate mit m ≽ 2 besonders gute stabilisierende Wirkung zeigen. Weiterhin sind solche Aminderivate bevorzugt, die keine hydrolysierbaren Gruppen wie Estergruppen enthalten.

Als R⁷ kommen die gleichen Reste in Betracht, wie sie für R⁵ genannt sind. Bevorzugt steht R⁷ für C₁-C₄-Alkyl.

Als R⁸ kommen neben Wasserstoff die gleichen Reste in Betracht, wie sie für R⁶ genannt worden sind. Bevorzugt steht R⁸ für Wasserstoff.

Als R⁹ kommen besonders Vinyl, Isopropenyl oder C₁₅-C₁₇-Alkylreste in Betracht.

Als R¹⁰ kommen beispielsweise die oben genannten C₈-C₁₈-Alkylreste sowie Nonadecyl, Eicosyl, Uneicosyl und Doeicosyl in Betracht. Dabei sind Mischungen verschiedener Reste R¹⁰, die sich in der Länge der Kohlenstoffkette unterscheiden, bevorzugt.

Die Reste R¹¹ sind Wasserstoff oder organische Reste, wie sie bei der radikalischen Polymerisation der Ausgangsmonomeren, in diesem Fall von einem Ethylenderivat und einem Maleinsäureimidderivat, entstehen, also z.B. ein Rest, der aus dem Polymerisationsinitiator oder aus einem intermediär aufgetretenen Radikal entsteht oder ein anderer derartiger Rest, wie er dem Fachmann geläufig ist.

Bevorzugte Aminverbindungen sind auch die folgenden:
2,2,6,6-tetramethylpiperidin,
2,2,6,6-tetramethylpiperidin-4-ol,
2,2,6,6-tetramethylpiperidin-4-on,
2,2,6,6-tetramethylpiperidin-4-yl-acetat,
2,2,6,6-tetramethylpiperidin-4-yl-2-ethylhexanoat,
2,2,6,6-tetramethylpiperidin-4-yl-stearat,
2,2,6,6-tetramethylpiperidin-4-yl-benzoat,
2,2,6,6-tetramethylpiperidin-4-yl-(4-tert-butyl)benzoat,
Bis(2,2,6,6-tetramethylpiperidin-4-yl)-succinat,
Bis(2,2,6,6-tetramethylpiperidin-4-yl)-adipat,
Bis(2,2,6,6-tetramethylpiperidin-4-yl)-sebacat,
Bis(2,2,6,6-tetramethylpiperidin-4-yl)-n-butylmalonat,
Bis(2,2,6,6-tetramethylpiperidin-4-yl)-phthalat,
Bis(2,2,6,6-tetramethylpiperidin-4-yl)-isophthalat,
Bis(2,2,6,6-tetramethylpiperidin-4-yl)-terephthalat,
Bis(2,2,6,6-tetramethylpiperidin-4-yl)-hexyhydroterephthalat,
N,N'-Bis(2,2,6,6-tetramethylpiperidin-4-yl)-adipinamid,
N-(2,2,6,6-tetramethylpiperidin-4-yl)-caprolactam,
N-(2,2,6,6-tetramethylpiperidin-4-yl)-dodecylsuccinimid,
2,4,6-Tris-[N-butyl-N-(2,2,6,6,-tetramethylpiperidin-4-yl]-striazin,
4,4'-Ethylenbis(2,2,6,6-tetramethylpiperazin-3-on) und
Tris-(2,2,6,6-tetramethyl-1-oxyl-piperidin-4-yl)phosphit
sowie deren N-Hydroxy- und N-Oxylderivate.

Besonders bevorzugte Aminverbindungen sind das Poly-[3-eicosyl(-tetracosyl)-1-[2,2,6,6-tetramethylpiperidin-4-yl]-pyrrolidon-2,5-dion] (Uvinul® 5050 H, Hersteller BASF AG, sowie ganz besonders das Poly[[6-(1,1,3,3-tetrame thylbutyl)amino]1,3,5-triazin-2,4-diyl][2,2,6,6-tetramethyl-4-piperidinyl)imino]-1,6-hexaandiyl[(2,2,6,6-tetramethyl-4-piperidinyl)imino]] (Chimasorb®944, Hersteller Ciba Additives GmbH)

Wie bei den Piperidinderivaten sind auch unter den Derivaten des Chinolins und des Diphenylamins solche bevorzugt, die über geeignete organische Reste oligomerisiert oder polymerisiert sind. Als geeignet haben sich z.B. polymerisiertes 2,2,4-Trimethyl-1,2-dihydrochinolin (TMQ), 6-Ethoxy-2,2,4-trimethyl-1,2-dihydrochinolin (ETMQ), styrolisiertes Diphenylamin (SDPA) und octyliertes Diphenylamin (ODPA) erwiesen. Derartige sterisch gehinderte Amine oder deren N-Hydroxy- oder N-Oxylderivate wurden bislang vor allem zur Stabilisierung von Kautschuk verwendet; Ethylenhomo- und Copolymere stabilisiert durch Zusatz von Derivaten des Chinolins oder Diphenylamins waren vor unserer Erfindung nicht bekannt.

Die erfindungsgemäß verwendeten Ethylenhomo- und -copolymere enthalten die sterisch gehinderten Amine oder deren N-Hydroxy- oder N-Oxylderivate vorzugsweise in einer Menge von 100 bis 5000 ppm, besonders bevorzugt in einer Menge von 300 bis 2000 ppm, bezogen auf die Gesamtmasse der Polymeren.

Üblicherweise enthält das Polyethylen noch zusätzliche Substanzen zur Wärme- und Verarbeitungsstabilisierung. Zu diesen Substanzen, die auch in Kombination mit den erfindungsgemäß verwendeten Stabilisatoren zur RME-Beständigkeit eingesetzt werden können, zählen sterisch gehinderte Phenole, die auch Stickstoff und/oder Schwefel als Heteroelemente enthalten können, Lactone, die auch Stickstoff und/oder Schwefel als Heteroelemente enthalten können, organische Phosphorigsäureester (z.B. Trialkylphosphite), die auch Stickstoff und/oder Schwefel als Heteroelemente enthalten können, sowie Alkali- und Erdalkalistearate. Beispiele für Stabilisatoren aus der Klasse sterisch gehinderter Phenole sind der Benzolpropansäure-3,5-bis (1,1-dimethylethyl)-4-hydroxy-2,2-bis[[3-[3,5-bis(1,1-dimethylethyl)-4-hydroxyphenyl]-1-oxopropoxy]methyl]-1,3-propandiylester (Irganox®1010 Hersteller: Ciba Additives GmbH), der Benzolpro-0 pansäure-3,5-bis(1,1-dimethylethyl)-4-hydroxy-octadecylester (Irganox®1076 Hersteller: Ciba Additives GmbH), das 4-[[4,6-Bis(octylthio)-1,3,5-triazin-2-yl]amino]-2,6-bis(1,1-dimethylethyl)-phenol (Irganox®565 Hersteller: Ciba Additives GmbH), das N,N'-Hexamethylen-bis(3,5-di-tert.butyl-4-hydroxy-hydrozimtsäureamid) (Irganox®1098 Hersteller: Ciba Additives GmbH). Beispiele für Stabilisatoren aus der Klasse der Lactone sind Benzofuran-2-one wie das 5,7-Di-t-butyl-3-(3,4-dimethylphenyl)-3H-benzofuran-2-on. Beispiele für Stabilisatoren aus der Klasse der organischen Phosphorigsäureester sind 2,4-(Bis(1,1-dimethylethyl)phenol-phosphit (Irganox®168 Hersteller: Ciba Additives GmbH) und der Phosphorigsäure, [1,1'-biphenyl]4,4'-diylbis-, tetrakis-[2,4-bis(1,1-dimethylethyl)phenyl]ester.

Die Einarbeitung der Stabilisatoren in die Polymere kann beispielsweise während der Herstellung eines Rohgranulats oder erst während des Aufschmelzvorgangs zur Vorbereitung der Formgebung geschehen, die z.B. durch Extrusion, Spritzguß oder Blasformen erfolgen kann.

Zur Anwendung im Bereich der Extrusion und des Blasformens besitzt das Polyethylen vorzugsweise eine Schmelzefließrate MFR (190/21,6) von 1 bis 25 g/10 min, insbesondere 2 bis 20 g/10 min, zur Anwendung im Bereich des Spritzgießens vorzugsweise eine Schmelzefließrate MFR (190/2,16) von 0,1 bis 100 g/10 min, insbesondere 0,2 bis 10 g/10 min.

Zur erfindungsgemäßen Verwendung eignen sich besonders Ethylenhomo- und -copolymere einer Dichte zwischen 0,930 und 0,970 g/cm³, insbesondere zwischen 0,940 und 0,960, besonders vorteilhaft wird als Polymer HDPE eingesetzt, wie es z.B. zur Herstellung von KKB üblicherweise verwendet wird.

Die erfindungsgemäß verwendeten Ethylenhomo- und -copolymere eignen sich ausgezeichnet zur Herstellung von Kunststoffkörpern und Bauteilen für den Transport und die Lagerung von Pflanzenöle-0 stern, insbesondere von Pflanzenölmethylestern.

Als Kunststoffkörper und Bauteile sind dabei alle die Kunststoffteile zu verstehen, die längere Zeit den Pflanzenölestern ausgesetzt sind, besonders also Kunstoffkraftstoffbehälter, aber auch 5 Teile wie Rohre und Zuleitungen, Flaschen, Kanister, Fässer usw.

### Beispiele

### Beispiele 1 bis 8

Hochmolekulares Polyethylen (Lupolen® 4261 A, Hersteller BASF AG, wurde mit den in der Tabelle 1 genannten Stabilisatoren ausgerüstet. Hierzu wurden je ca. 150 g des Polyethylens mit den Stabilisatoren in den in Tab. 1 genannten Konzentrationen trocken gemischt und während 5 Minuten auf einem Walzenstuhl bei 180°C aufgeschmolzen und. innig vermischt. Aus den so erhaltenen Walzfellen wurden 4 mm starke Preßplatten gemäß ISO 1872-2 hergestellt. Aus diesen Preßplatten wurden Zugstäbe nach ISO 527-2 Typ 1B ausgestanzt. Von jeder Probe wurden 4 Zugstäbe in RME, welchem 0,3 ml/l Glycerin, 5 ml/l Ölsäure und 2,7 ml/l Wasser zugesetzt wurde, bei 90°C über 1000 h gelagert. Anschließend wurden diese Zugstäbe aus dem RME entnommen, anhaftende Flüssigkeit abgetrocknet und über 72 h bei 100°C an Luft gelagert. Nach dieser Behandlung wurde im Zugversuch nach ISO 527 die Bruchdehnung als Mittelwert aus 4 Einzelmessungen ermittelt (Tab. 1). Die Ergebnisse der Tabelle 1 zeigen, daß die mit Stabilisatoren vom Typ der sterisch gehinderten Amine (HALS) ausgerüsteten Proben, die höchsten Werte für die Bruchdehnung aufweisen, während phenolische und Phosphitstabilisatoren keine Wirkung zeigen.

### Beispiele 9 bis 11

Aus Lupolen® 4261 A, welches gemäß Tab. 2 mit unterschiedlichen Mengen des HALS-Stabilisators Chimasorb® 944 (Hersteller: Ciba Additives GmbH) ausgerüstet war, wurden Testflaschen (Nenninhalt 300 ml) mit einer mittleren Wanddicke von 0,8 mm durch Blasformen hergestellt. Diese Testflaschen wurden mit RME, welchem 0,3 ml/l Glycerin, 5 ml/l Ölsäure und 2,7 ml/l Wasser zugesetzt war, gefüllt. Die zur Vermeidung eines Innendrucks nicht dicht verschlossenen Flaschen wurden bei 80°C in einem Trockenschrank an Luft gelagert. Zu festgelegten Zeitpunkten wurden Flaschen entnommen. An Proben der äußeren Wandoberfläche dieser Flaschen wurde die Grenzviskosität des Polyethylens als Staudinger-Index gemäß ISO 1628 bestimmt. Die Ergebnisse sind der Tab. 2 zu entnehmen.

**Tabelle 1:**

| Einfluß unterschiedlicher Stabilisatoren auf die Reißdehnung von Polyethylen | | | | |
|---|---|---|---|---|
| Beispiel Nr. | Stabilisator | Stabilisator-typ | Menge [ppm] | Reißdehnung ISO 527 [%] |
| 1 | ohne | | | 47 |
| 2 | IRGANOX 565 | Phenol | 300 | 39 |
| 3 | IRGANOX 1098 | Phenol | 300 | 44 |
| 4 | IRGANOX 1010 | Phosphit | 1000 | 49 |
| 5 | IRGAFOS 168 | Phenol | 1000 | 40 |
| 6 | UVINUL 5050H | HALS | 300 | 58 |
| 7 | CHIMASORB 944 | HALS | 300 | 125 |
| 8 | TINUVIN 783 | HALS | 300 | 71 |

**Tabelle 2:**

| Abbau von Polyethylen an der Außenoberfläche RME gefüllter Flaschen nach Lagerung bei 80°C an Luft | | | | | |
|---|---|---|---|---|---|
| Beispiel Nr. | Zusatz an CHIMASORB 944 [ppm] | Staudinger-Index [ccm/g] nach Lagerzeit | | | |
| | | Start | 8 d | 15 d | 22 d |
| 9 | ohne | 370 | 92 | 45 | 36 |
| 10 | 300 | 370 | 358 | 55 | 61 |
| 11 | 1100 | 370 | 330 | 318 | 260 |

### Beispiele 12 und 13

Hochmolekulares Polyethylen (Lupolen® 4261 A (Hersteller BASF AG), wurde mit dem in Tabelle 3 genannten Stabilisator (Flectol® TMQ, Hersteller: Flexsys GmbH) ausgerüstet. Hierzu wurde der Stabilisator in der in Tab. 3 genannten Konzentration in Chloroform gelöst und mit Lupolen® gemischt. Das Chloroform wurde verdampft und die getrocknete Mischung wurde während 5 Minuten auf einem Walzenstuhl bei 180°C aufgeschmolzen und innig vermischt. Aus den so erhaltenen Walzfellen wurden 1 mm starke Preßplatten gemäß ISO 1872-2 hergestellt. Diese Preßplatten wurden in ca. 15 mm breite Streifen geschnitten. Von jeder Probe wurde ein. Streifen in RME (Connester ME 6020), welchem 0,3 ml/l Glycerin, 5 ml/l Ölsäure und 2,7 ml/l Wasser zugesetzt wurden, bei 90°C über 72 h gelagert. Anschließend wurden diese Streifen aus dem RME entnommen, anhaftende Flüssigkeit abgetrocknet und bei 120°C an Luft gelagert. Nach dieser Behandlung wurde die Grenzviskosität des Polyethylens als Staudinger-Index gemäß ISO 1628 bestimmt. Die Ergebnisse sind der Tab. 3 zu entnehmen.

**Tabelle 3:**

| Einfluß von Stabilisatoren auf den Abbau von Polyethylen bei Lagerung in RME | | | | | | | |
|---|---|---|---|---|---|---|---|
| Bsp. Nr. | Stabilisator | Zusatz an Stabilisator [ppm] | Staudinger-Index [ccm/g] nach Lagerzeit | | | | |
| | | | Start | 50 h | 239 h | 500 h | 1004 h |
| 12 | ohne Zusatz | | 370 | 119 | 98 | a) | a) |
| 13 | 2,2,4-Trimethyl-1,2-dihydrochinolin, Polymerisiert (Flectol® (TMQ) | 1000 | 335 | 323 | 334 | 323 | 332 |

| | | | | | | | |
|---|---|---|---|---|---|---|---|
| ^{a)}: Probe versprödet | | | | | | | |

## Patentansprüche

1. Verwendung von durch sterisch gehinderte Amine oder deren N-Hydroxy- oder N-Oxylderivate stabilisierten Ethylenhomo- und -copolymeren zur Herstellung von Kunststoffkörpern und Bauteilen für die Lagerung und den Transport von Pflanzenölestern.

2. Verwendung nach Anspruch 1, **dadurch gekennzeichnet, daß** die Ethylenhomo- und -copolymere durch sterisch gehinderte Amine oder deren N-Hydroxy- oder N-Oxylderivate der allgemeinen Formel I 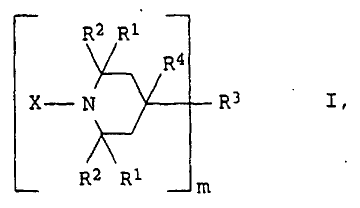 wobei
R¹, R² C₁-C₄-Alkyl, Phenyl oder gemeinsam mit dem C-Atom, an das sie gebunden sind, einen 5- oder 6-gliedrigen gesättigten Kohlenwasserstoffring,
R³ Wasserstoff, Hydroxyl, Amino oder einen m-wertigen über Sauerstoff oder Stickstoff gebundenen organischen Rest oder zusammen mit R⁴ Sauerstoff oder eine unter R⁴ definierte Ringstruktur,
R⁴ Wasserstoff, C₁-C₁₂-Alkyl oder zusammen mit R³ Sauerstoff oder zusammen mit R³ und dem C-Atom, an das sie gebunden sind, folgende Ringstrukturen 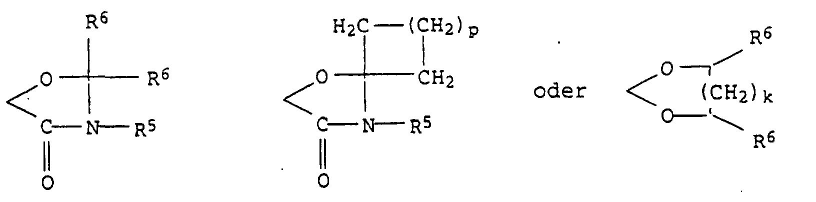 wobei für die Fälle, in denen R³ mit R⁴ einen gemeinsamen Rest bildet, m = 1 ist,
R⁵ Wasserstoff, C₁-C₁₂-Alkyl oder -(CH₂)_{z}-COOR⁶,
R⁶ gleiches oder verschiedenes C₁-C₁₈-Alkyl,
X Wasserstoff, Hydroxy oder Sauerstoff,
k 0 oder 1
z, p 1 bis 12 und
m 1 bis 100
bedeuten, stabilisiert sind.

3. Verwendung nach Anspruch 1 oder 2, **dadurch gekennzeichnet, daß** die Ethylenhomo- und -copolymere sterisch gehinderte Amine oder deren N-Hydroxy- oder N-Oxylderivate in einer Menge von 100 bis 5000 ppm, bezogen auf die Gesamtmasse der Polymeren, enthalten.

4. Verwendung nach den Ansprüchen 1 bis 3, **dadurch gekennzeichnet, daß** die Ethylenhomo- und copolymere eine Dichte zwischen 0,930 und 0,970 g/cm³ aufweisen.

5. Verwendung nach den Ansprüchen 1 bis 4, **dadurch gekennzeichnet, daß** als Polymer HDPE eingesetzt wird.

6. Verwendung von Kunststoffkörpern und Bauteilen, hergestellt unter Verwendung von stabilisierten Ethylenhomo- und/oder Copolymeren gemäß den Ansprüchen 1 bis 5, für den Transport und die Lagerung von Pflanzenölestern.

## Claims

1. The use of ethylene homo- and copolymers stabilized by sterically hindered amines or their N-hydroxy or N-oxyl derivatives to produce articles of plastic and components for the storage and transport of vegetable oil esters.

2. The use as claimed in claim 1, wherein the ethylene homo- and copolymers are stabilized by sterically hindered amines or their N-hydroxy or N-oxyl derivatives, of the formula I 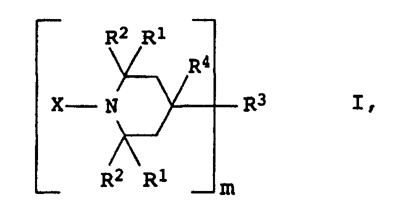 where
R¹ and R² are C₁-C₄-alkyl or phenyl or together with the carbon to which they are attached are a 5- or 6-membered saturated hydrocarbon ring,
R³ is hydrogen, hydroxyl, amino or an m-valent, oxygen- or nitrogen-bonded organic radical or together with R⁴ is oxygen or a ring structure defined under R⁴,
R⁴ is hydrogen or C₁-C₁₂-alkyl or together with R³ is oxygen or together with R³ and the carbon to which they are attached is a ring structure 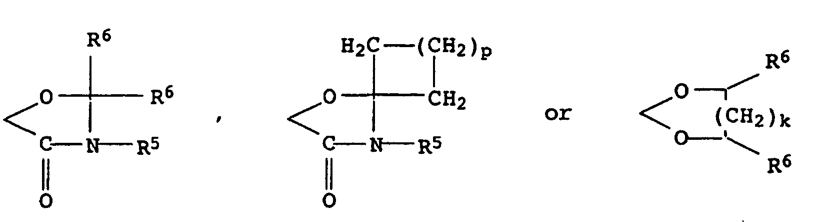 where m is 1 when R³ and R⁴ unite to form a radical,
R⁵ is hydrogen, C₁-C₁₂-alkyl or -(CH₂)_{z}-COOR⁶,
R⁶ is identical or different C₁-C₁₈-alkyl,
X is hydrogen, hydroxyl or oxygen,
k is 0 or 1,
z and p are from 1 to 12 and
m is from 1 to 100.

3. The use as claimed in claim 1 or 2, wherein the ethylene homo- and copolymers comprise sterically hindered amines or their N-hydroxy or N-oxyl derivatives in an amount of from 100 to 5000 ppm, based on the total mass of the polymers.

4. The use as claimed in any of claims 1 to 3, wherein the ethylene homo- and copolymers have a density of from 0.930 to 0.970 g/cm³.

5. The use as claimed in any of claims 1 to 4, wherein HDPE is employed as polymer.

6. The use of an article of plastic or component which is produced using stabilized ethylene homo- and/or copolymers as set forth in any of claims 1 to 5 for the transport and storage of vegetable oil esters.

## Revendications

1. Utilisation d'homo- et -copolymères d'éthylène stabilisés par des amines à empêchement stérique ou leurs dérivés N-hydroxy ou N-oxy, pour la préparation de masses en matière plastique et d'éléments structuraux pour le stockage et le transport d'esters d'huile végétales.

2. Utilisation selon la revendication 1, **caractérisée par le fait que** les homo- et -copolymères d'éthylène sont stabilisés par des amines à empêchement stérique ou leurs dérivés N-hydroxy ou N-oxy de formule générale I 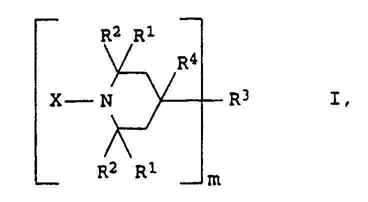 où
R¹, R² désigne un groupe alkyle en C₁-C₄, phényle ou, conjointement avec l'atome de carbone auquel ils sont liés, un cycle hydrocarboné saturé à 5 ou 6 chaînons,
R³ représente un groupe hydrogène, hydroxyle, amino ou un reste organique de valence m lié par un oxygène ou un azote, ou conjointement avec R⁴ l'oxygène ou une structure cyclique définie sous R⁴,
R⁴ représente un groupe hydrogène, alkyle en C₁-C₁₂ ou conjointement avec R³ l'oxygène, ou conjointement avec R³ et l'atome de carbone auquel ils sont liés, les structures cycliques suivantes 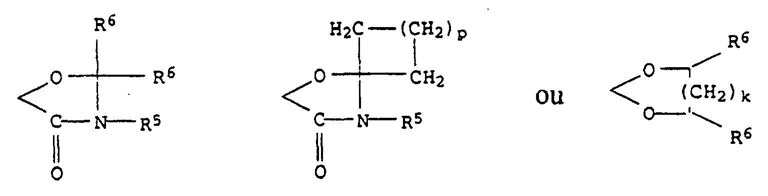 tandis que dans le cas où R³ forme avec R⁴ un reste commun, m = 1,
R⁵ désigne l' hydrogène, un alkyle en C₁-C₁₂ ou -(CH₂)_{z}-COOR⁶,
R⁶ représente des groupes alkyle en C₁-C₁₈ identiques ou différents,
X désigne l'hydrogène, un hydroxy ou l'oxygène,
k est 0 ou 1,
z, p valent de 1 à 12 et
m vaut de 1 à 100.

3. Utilisation selon la revendication 1 ou 2, **caractérisée par le fait que** les homo- et copolymères d'éthylène contiennent des amines à empêchement stérique ou leurs dérivés N-hydroxy ou N-oxy en une quantité de 100 à 5000 ppm, par rapport à la masse totale des polymères.

4. Utilisation selon les revendications 1 à 3, **caractérisée par le fait que** les homo- et copolymères d'éthylène présentent une masse volumique entre 0,930 et 0,970 g/cm³.

5. Utilisation selon les revendications 1 à 4, **caractérisée par le fait qu'**on utilise du HDPE comme polymère.

6. Utilisation de masses en matière plastique et d'éléments structuraux, préparés par utilisation d'homo- et/ou copolymères d'éthylène stabilisés selon les revendications 1 à 5, pour le transport et le stockage d'esters d'huiles végétales.
